# EUROPEAN PATENT APPLICATION

(11) **EP 4 418 444 A1**
(43) Date of publication of application: **21.08.2024**
(21) Application number: 22919438.6
(22) Date of filing: 13.01.2022
(51) Int. Cl.: H01M 50/609

(54) **BATTERY CELL, BATTERY, ELECTRIC DEVICE, AND METHOD AND DEVICE FOR MANUFACTURING BATTERY CELL**

(71) Applicant: Contemporary Amperex Technology Co., Limited, Ningde City, Fujian 352100 (CN)
(72) Inventor: WU, Ningsheng, Ningde City, Fujian 352100 (CN); BAI, Lulu, Ningde City, Fujian 352100 (CN); ZHOU, Wenlin, Ningde City, Fujian 352100 (CN); KE, Haibo, Ningde City, Fujian 352100 (CN); LI, Quankun, Ningde City, Fujian 352100 (CN); WANG, Peng, Ningde City, Fujian 352100 (CN)
(74) Representative: Behr, Wolfgang
(86) International application number: PCT/CN2022/071895
(87) International publication number: WO 2023/133775

(57) **Abstract**

Embodiments of the present application provide a battery cell, a battery, a power consumption device, and a battery cell manufacturing method and device. The battery cell includes: a shell, including a first wall provided with a medium injection hole; an electrode assembly, disposed inside the shell; and an insulating member, disposed between the first wall and the electrode assembly to insulate and isolate the first wall and the electrode assembly, where a guide structure is disposed on a side, facing the first wall, of the insulating member, and the guide structure is configured to guide a medium injected from the medium injection hole to an edge of the insulating member, so that the medium enters the interior of the battery cell from the edge of the insulating member. The battery cell has high safety.

## Description

### Technical Field

The present application relates to the field of battery technologies, and particularly to a battery cell, a battery, a power consumption device, and a battery cell manufacturing method and device.

### Background Art

Energy conservation and emission reduction are the key to sustainable development of the automotive industry. Electric vehicles have become an important part of the sustainable development of the automotive industry due to their advantages of energy conservation and environmental protection. For electric vehicles, the battery technology is an important factor for their development.

In the development of the battery technology, in addition to improving energy density of batteries, the safety of batteries is also an issue that cannot be ignored. Therefore, how to improve the safety of batteries is an urgent technical problem to be solved in the battery technology.

### Summary

The objective of the present application is to provide a battery cell, a battery, a power consumption device, and a battery cell manufacturing method and device. The battery cell has high safety.

The present application is implemented through the following technical solutions.

In a first aspect, the present application provides a battery cell, including: a shell, including a first wall provided with a medium injection hole; an electrode assembly, disposed inside the shell; and an insulating member, disposed between the first wall and the electrode assembly to insulate and isolate the first wall and the electrode assembly, where a guide structure is disposed on a side, facing the first wall, of the insulating member, and the guide structure is configured to guide a medium injected from the medium injection hole to an edge of the insulating member, so that the medium enters the interior of the battery cell from the edge of the insulating member.

According to the battery cell in embodiments of the present application, the guide structure guides the medium injected from the medium injection hole to the edge of the insulating member, so that the medium enters the interior of the battery cell from the edge of the insulating member, where the guide structure can disperse the medium and reduce the flow rate of the medium, thereby effectively alleviating impact force of the medium acting on the electrode assembly, reducing the risk of damage to the electrode assembly by the medium, and improving the safety of the battery cell.

According to some embodiments of the present application, the guide structure includes a first guide groove, and a projection of the medium injection hole on the insulating member is located in the first guide groove in a thickness direction of the first wall.

In the foregoing solution, the projection of the medium injection hole on the insulating member corresponds to the first guide groove, so that the first guide groove receives the medium injected from the medium injection hole and enables the medium to disperse.

According to some embodiments of the present application, the guide structure further includes a second guide groove, the second guide groove is an annular groove extending along the edge of the insulating member, the first guide groove is in communication with the second guide groove, and the first guide groove is used for guiding the medium to the second guide groove.

In the foregoing solution, the second guide groove extends along the edge of the insulating member and is an annular groove, and the first guide groove is in communication with the second guide groove, so as to ensure that the medium injected from the medium injection hole flows to the edge of the insulating member smoothly.

According to some embodiments of the present application, the bottom surface of the first guide groove is a slope surface to guide the medium to the second guide groove.

In the foregoing solution, the configuration of the slope surface creates an angle between the bottom surface of the first guide groove and the bottom surface of the second guide groove, which enables the medium inside the first guide groove to quickly flow towards the second guide groove smoothly.

According to some embodiments of the present application, both ends of the first guide groove are in communication with the second guide groove, the bottom surface of the first guide groove includes a first slope surface and a second slope surface, the first slope surface extends from a middle part of the first guide groove to one end of the first guide groove, the second slope surface extends from the middle part of the first guide groove to the other end of the first guide groove, and the projection of the medium injection hole on the insulating member is located at the intersection of the first slope surface and the second slope surface.

In the foregoing solution, the configuration of the first slope surface and the second slope surface facilitates guidance of the medium injected from the medium injection hole to both ends of the first guide groove by the first slope surface and the second slope surface, so as to ensure that the medium enters the second guide groove and flows smoothly.

According to some embodiments of the present application, a wall of the second guide groove is provided with a through hole from which the medium inside the second guide groove 132 flows out.

In the foregoing solution, the through hole facilitates flowing of the medium out of the second guide groove, so as to guide the medium to enter the interior of the battery cell.

According to some embodiments of the present application, a projection of the electrode assembly on the insulating member does not overlap at least partially with the through hole.

In the foregoing solution, in the thickness direction of the first wall, the through hole does not overlap at least with the projection of the electrode assembly on the insulating member, which can reduce a probability of direct action of the medium on the electrode assembly when the medium enters the interior of the battery cell from the through hole. In an extreme case, the through hole does not overlap with the projection of the electrode assembly on the insulating member, and the medium does not directly act on the electrode assembly, thereby reducing the risk of damage to the electrode assembly by the medium.

According to some embodiments of the present application, the insulating member is rectangular, and the through hole includes a first sub through hole located at a corner of the insulating member.

In the foregoing solution, the first sub through hole is located at the corner of the insulating member, whereby the non-overlapping area between the insulating member and the electrode assembly can be reasonably used, the energy density of the battery cell is ensured, and the medium can enter the interior of the battery cell without directly impacting the electrode assembly.

According to some embodiments of the present application, there is a plurality of electrode assemblies which are arranged in their thickness direction, each electrode assembly includes a straight area and bent areas connected to two ends of the straight area, each through hole includes a second sub through hole, and the second sub through holes are disposed at two ends of the insulating member in the length direction and located between the projections of the bent areas of two adjacent electrode assemblies on the insulating member.

In the foregoing solution, when there is a plurality of electrode assemblies, the second sub through hole is disposed at a position of the insulating member that corresponds to an area between the bent areas of the two adjacent electrode assemblies, so that the medium does not directly act on the electrode assemblies when entering the battery cell via the second sub through hole, the space of the insulating member is reasonably used, and the impact force of the medium on the electrode assemblies is weakened.

According to some embodiments of the present application, the walls of the second guide groove include a bottom wall, an inner wall and an outer wall, the outer wall and the inner wall are disposed opposite, and the through hole is disposed on the outer wall or at the intersection of the outer wall and the bottom wall.

In the foregoing solution, the bottom wall, the outer wall and the inner wall enclose the second guide groove, the outer wall and the inner wall point to the first wall from the bottom wall, the bottom wall carries the medium, and the outer wall and the inner wall constrain the medium. When the through hole is disposed on the outer wall, the medium first acts on the inner wall of the shell when entering the interior of the battery cell from the through hole on the outer wall, whereby the flow rate is reduced and the impact force on the electrode assembly is reduced. When the through hole is disposed at the intersection of the outer wall and the bottom wall, because the projection of the electrode assembly on the insulating member has a small overlapping area with the edge of the insulating member, or the projection of the electrode assembly on the insulating member is located inside the insulating member, the medium can be prevented as much as possible from directly acting on the electrode assembly when entering the interior of the battery cell from the intersection of the outer wall and the bottom wall, the impact force of the medium on the electrode assembly can be effectively weakened, and the damage to the electrode assembly by the medium can be reduced.

According to some embodiments of the present application, the insulating member includes a bottom plate, a first boss and a second boss, the first boss and the second boss are formed on a side, facing the first wall, of the bottom plate, the first boss and the second boss are spaced, and the first guide groove is formed between the first boss and the second boss.

In the foregoing solution, the first guide groove is formed between the first boss and the second boss, and a flow path of the medium is confined through the first boss, the second boss and the bottom plate, so the structure is simple, and the insulating member has high strength.

According to some embodiments of the present application, the insulating member further includes a flange, the flange is disposed on the periphery of the bottom plate and protrudes from the bottom plate towards the first wall, the flange encloses the first boss and the second boss, and the second guide groove is formed between an outer circumference surface of the first boss and the second boss and an inner circumference surface of the flange.

In the foregoing solution, the flange is disposed on the periphery of the bottom plate and encloses the first boss and the second boss to form the second guide groove, so the structure is simple and the medium can enter the interior of the battery cell from the edge of the insulating member.

According to some embodiments of the present application, the first boss and the second boss abut against the first wall, there is a gap between the flange and the first wall, and the medium inside the second guide groove flows out from the gap.

In the foregoing solution, the first boss and the second boss abut against the first wall to ensure stable positioning of the insulating member with the first wall; and the gap between the flange and the first wall facilitates flowing of the medium out of the second guide groove, so the structure is simple and easy to machine.

According to some embodiments of the present application, the first boss, the second boss and the flange all abut against the first wall.

In the foregoing solution, the first boss, the second boss and the flange all abut against the first wall, and the insulating member has a plurality of contact positions and a large contact area with the first wall, so that the insulating member is stably positioned with the first wall.

According to some embodiments of the present application, a first recessed portion and a second recessed portion are disposed on a side, away from the first wall, of the insulating member, the first recessed portion corresponds to the first boss, and the second recessed portion corresponds to the second boss.

In the foregoing solution, the first recessed portion corresponds to the first boss, and the second recessed portion corresponds to the second boss, so that tabs of the electrode assembly can extend into the first recessed portion and the second recessed portion, and the installation space can be saved to improve the energy density of the battery cell.

According to some embodiments of the present application, the shell includes a shell body and an end cover, the shell body has an opening, the end cover covers the opening, and the first wall is the end cover.

In the foregoing solution, the first wall is the end cover, and the end cover covers the opening of the shell body to facilitate machining and assembly.

In a second aspect, the present application provides a battery, including the battery cell in the foregoing embodiments.

In a third aspect, the present application provides a power consumption device, including the battery cell in the foregoing embodiments, where the battery cell is used for providing electrical energy.

In a fourth aspect, the present application provides a battery cell manufacturing method, including: providing a shell, where the shell includes a first wall, and the first wall is provided with a medium injection hole; providing an electrode assembly; providing an insulating member, where the insulating member is provided with a guide structure, and the guide structure is configured to guide a medium injected from the medium injection hole to an edge of the insulating member to enter the interior of the battery cell from the edge of the insulating member; and disposing the electrode assembly inside the shell and disposing the insulating member between the first wall and the electrode assembly to insulate and isolate the first wall and the electrode assembly, so that the guide structure is located on a side, facing the first wall, of the insulating member.

According to the battery cell manufacturing method in this embodiment of the present application, the medium is guided to enter the interior of the battery cell from the edge of the insulating member through the guide structure disposed on the insulating member, which can effectively alleviate impact force of the medium acting on the electrode assembly and reduce the risk of damage to the electrode assembly by the medium, so that the battery cell has relatively high safety.

In a fifth aspect, the present application provides a battery cell manufacturing device, including: a provision module, configured to provide a shell, an electrode assembly, and an insulating member, where the shell includes a first wall, the first wall is provided with a medium injection hole, the insulating member is provided with a guide structure, and the guide structure is configured to guide a medium injected from the medium injection hole to an edge of the insulating member to enter the interior of the battery cell from the edge of the insulating member; and an assembly module, configured to dispose the electrode assembly inside the shell and dispose the insulating member between the first wall and the electrode assembly to insulate and isolate the first wall and the electrode assembly, so that the guide structure is located on a side, facing the first wall, of the insulating member.

According to this embodiment of the present application, the battery cell manufacturing device can manufacture the battery cell with relatively high safety.

The above description is only a summary of the technical solutions of the present application. In order to understand the technical means in the present application more clearly, it can be implemented in accordance with the content of the specification; and in order to make the above and other objectives, features and characteristics of the present application more obvious and easier to understand, and the specific embodiments of the application are cited below.

### Brief Description of Drawings

In order to illustrate the technical solutions in the embodiments of the present application more clearly, brief description will be made below to the drawings required in the embodiments of the present application. Apparently, the drawings described below are some embodiments of the present application only, and other drawings could be obtained based on these drawings by those of ordinary skill in the art without creative efforts.
FIG. 1 is a schematic structural diagram of a vehicle according to some embodiments of the present application;
FIG. 2 is a schematic diagram of an exploded structure of a battery according to some embodiments of the present application;
FIG. 3 is a schematic diagram of an exploded structure of a battery cell according to some embodiments of the present application;
FIG. 4 is an axonometric view of an insulating member according to some embodiments of the present application;
FIG. 5 is a cross-sectional view of a first wall and the insulating member after assembly according to some embodiments of the present application;
FIG. 6 is a top view of the insulating member according to some embodiments of the present application;
FIG. 7 is a schematic structural diagram of through holes of the insulating member according to some embodiments of the present application;
FIG. 8 is a schematic structural diagram of the through holes of the insulating member according to other embodiments of the present application;
FIG. 9 is a schematic assembly diagram of electrode assemblies and the insulating member according to some embodiments of the present application;
FIG. 10 is an enlarged view of position A in FIG. 9;
FIG. 11 is an axonometric view of the insulating member according to other embodiments of the present application;
FIG. 12 is a partial schematic diagram of the insulating member and a shell after assembly according to some embodiments of the present application;
FIG. 13 is a partial cross-sectional view of the insulating member and the electrode assemblies after assembly according to some embodiments of the present application;
FIG. 14 is a partial schematic diagram of the insulating member and the shell after assembly according to other embodiments of the present application;
FIG. 15 is a schematic structural diagram of the insulating member according to some embodiments of the present application;
FIG. 16 is a schematic flowchart of a battery cell manufacturing method according to some embodiments of the present application; and
FIG. 17 is a schematic block diagram of a battery cell manufacturing device according to some embodiments of the present application.

The drawings are not drawn to actual scale.

Marking description: 100 - battery; 101 - first portion; 102 - second portion; 10 - battery cell; 11 - shell; 111 - first wall; 1111 - medium injection hole; 112 - shell body; 12 - electrode assembly; 121 - straight area; 122 - bent area; 13 - insulating member; 131 - first guide groove; 1311 - first slope surface; 1312 - second slope surface; 132 - second guide groove; 1321 - bottom wall; 1322 - inner wall; 1323 - outer wall; 133 - through hole; 1331 - first sub through hole; 1332 - second sub through hole; 134 - bottom plate; 135 - first boss; 136 - second boss; 137 - flange; 138 - first recessed portion; 139 - second recessed portion; 14 - electrode terminal; 200 - controller; 300 - motor; 1000 - vehicle; X - thickness direction of the first wall; Y - thickness direction of the electrode assembly.

### Detailed Description of Embodiments

Implementations of the present application will be further described below in detail with reference to the drawings and embodiments. The detailed description of the following embodiments and the drawings are used to exemplarily illustrate principles of the present application, but cannot be used to limit the scope of the present application, that is, the present application is not limited to the described embodiments.

Unless otherwise defined, all technological and scientific terms used herein have the same meanings as those commonly understood by those skilled in the art to which the present application belongs. The terms used herein are merely for the purpose of describing specific embodiments, but are not intended to limit the present application. The terms "including" and "having" and any variations thereof in the specification and claims of the present application as well as the brief description of the drawings described above are intended to cover non-exclusive inclusion.

In the description of the embodiments of the present application, the terms "first", "second", and the like are only used to distinguish different objects and cannot be understood as indicating or implying relative importance or implying the quantity, specific order, or primary and secondary relation of the indicated technical features. In the description of the embodiments of the present application, "a plurality of" means two or more, unless otherwise specified.

The phrase "embodiment" referred to herein means that specific features, structures, or characteristics described in conjunction with the embodiment may be included in at least one embodiment of the present application. The phrase at various locations in the specification does not necessarily refer to the same embodiment, or an independent or alternative embodiment exclusive of another embodiment. Those skilled in the art understand, in explicit and implicit manners, that an embodiment described herein may be combined with another embodiment.

In the description of the embodiments of the present application, the term "and/or" describes only an association relationship between associated objects and represents that three relationships may exist. For example, A and/or B may represent the following three cases: A exists, both A and B exist, and B exists. In addition, the character "/" herein generally indicates an "or" relationship between contextually associated objects.

In the description of the embodiments of the present application, the term "a plurality of" means two (inclusive) or more. Similarly, "a plurality of groups" means two (inclusive) or more groups, and "a plurality of pieces" means two (inclusive) or more pieces.

In the description of the embodiments of the present application, an orientation or positional relationship indicated by the technical term "center", "longitudinal", "transverse", "length", "width", "thickness", "upper", "lower", "front", "back", "left", "right", "vertical", "horizontal", "top", "bottom", "internal", "external", "clockwise", "counterclockwise", "axial direction", "radial direction", "circumferential direction", or the like is based on an orientation or positional relationship shown in the drawings, and is merely for ease of describing the present application and simplifying the description, but does not indicate or imply that an apparatus or an element referred to must have a specific orientation or be constructed and operated in a specific orientation, and therefore cannot be understood as a limitation on the embodiments of the present application.

In the description of the embodiments of the present application, unless otherwise explicitly specified and defined, the technical terms "mounted", "connected", "connection", "fixed", and the like should be understood broadly. For example, the "connection" may be a fixed connection, a detachable connection, an integration, a mechanical connection, an electrical connection, a direct connection, an indirect connection through a medium, or an internal communication of two elements, or an interaction between two elements. Those of ordinary skill in the art may appreciate the specific meanings of the foregoing terms in the embodiments of the present application to specific circumstances.

The battery mentioned in the present application refers to a single physical module that includes one or more battery cells to provide a higher voltage and capacity. For example, the battery mentioned in the present application may include a battery module or a battery pack.

The battery cell includes an electrode assembly and an electrolyte, and the electrode assembly is composed of a positive electrode sheet, a negative electrode sheet and a separator. The operation of the battery cell mainly relies on the movement of metal ions between the positive electrode sheet and the negative electrode sheet. The positive electrode sheet includes a positive electrode current collector and a positive electrode active material layer. The positive electrode active material layer is coated on a surface of the positive electrode current collector, and the positive electrode current collector not coated with the positive electrode active material layer protrudes from the positive electrode current collector coated with the positive electrode active material layer and is used as a positive electrode tab. In an example of a lithium-ion battery, a material of the positive electrode current collector may be aluminum, and a positive electrode active material may be lithium cobalt oxide, lithium iron phosphate, ternary lithium, lithium manganate oxide, or the like. The negative electrode sheet includes a negative electrode current collector and a negative electrode active material layer. The negative electrode active material layer is coated on a surface of the negative electrode current collector, and the negative electrode current collector not coated with the negative electrode active material layer protrudes from the negative electrode current collector coated with the negative electrode active material layer and is used as a negative electrode tab. A material of the negative electrode current collector may be copper, and a negative electrode active material may be carbon, silicon, or the like. In order to ensure that no fusing occurs when a large current passes through, there are a plurality of positive electrode tabs which are stacked together and a plurality of negative electrode tabs which are stacked together. A material of the separator may be polypropylene (PP), polyethylene (PE), or the like.

The separator is disposed between the positive electrode sheet and the negative electrode sheet to insulate and isolate the positive electrode sheet and the negative electrode sheet.

At present, based on the development of the market situation, the application of power batteries is increasingly widespread. Power batteries are not only used in energy storage power systems of water power, firepower, wind power and solar power plants and the like, but also widely used in many fields of electric vehicles such as electric bicycles, electric motorcycles, and electric vehicles, military equipment, aerospace, and the like. With the continuous expansion of the application field of power batteries, their market demand is also constantly expanding.

The development of battery technologies needs to consider many design factors simultaneously, such as discharge capacity, charge and discharge rate, energy density and service life performance parameters. In addition, safety should also be considered.

The safety of a battery cell includes many factors, such as reliability of connection between a tab and an adapter, assembly tolerance, untimely opening of a pressure relief mechanism, and damage of an electrode assembly. The damage of the electrode assembly is one of the important factors affecting the safety of the battery cell. The inventor's research found that, in the manufacturing process of a battery cell, especially a lithium-ion battery, a medium (electrolyte) is required to be injected into the interior of the battery cell to facilitate electrochemical reactions in an electrode assembly. It should be noted that the medium is a fluid and has a flow rate when the medium is injected into the battery cell. In the process of injecting the medium into the interior of the battery cell, due to the excessive flow rate of the medium and the direct impact on the electrode assembly when the medium enters the battery cell, the separator is prone to collapse, so that the adjacent positive electrode sheet and the negative electrode sheet come into contact to cause a short circuit that poses a safety risk and affects the safety of the battery cell.

In view of this, in order to improve the safety of battery cells, the inventor conducted in-depth research and designed a battery cell, in which a guide structure is disposed on a side, facing a first wall, of an insulating member to guide a medium injected from a medium injection hole to an edge of the insulating member, so that the medium enters the interior of the battery cell from the edge of the insulating member.

In such a battery cell, because the guide structure guides the medium to the edge of the insulating member, the medium is dispersed under the guidance of the guide structure and the flow rate of the medium is reduced. Meanwhile, when the medium enters the interior of the battery cell, the contact area between the medium and the electrode assembly is small or even the medium does not directly impact the electrode assembly, which can effectively alleviate impact force of the medium on the electrode assembly, reduce the risk of damage to the electrode assembly by the medium, and improve the safety of the battery cell.

For example, when the size of the insulating member is greater than that of the electrode assembly, the edge of the insulating member does not overlap with the electrode assembly. In this case, the medium enters the interior of the battery cell from the edge of the insulating member to avoid direct impact of the medium on the electrode assembly, so that the battery cell has high safety.

The battery cell disclosed in the embodiments of the present application may be used, but is not limited to, in a power consumption device such as a vehicle, a ship or an aircraft. A power supply system of the power consumption device may be composed of battery cells disclosed in the present application.

An embodiment of the present application provides a power consumption device using a battery as a power supply. The power consumption device may be, but is not limited to, a mobile phone, a tablet computer, a laptop computer, an electric toy, an electric tool, an electric bicycle, an electric motorcycle, an electric vehicle, a ship, a spacecraft, or the like. The electric toy may include fixed or mobile electric toys, such as game consoles, electric vehicle toys, electric ship toys and electric aircraft toys, and the spacecraft may include airplanes, rockets, space shuttles, spaceships, and the like.

For convenient description, the following embodiments are described by an example of a vehicle as a power consumption device in an embodiment of the present application.

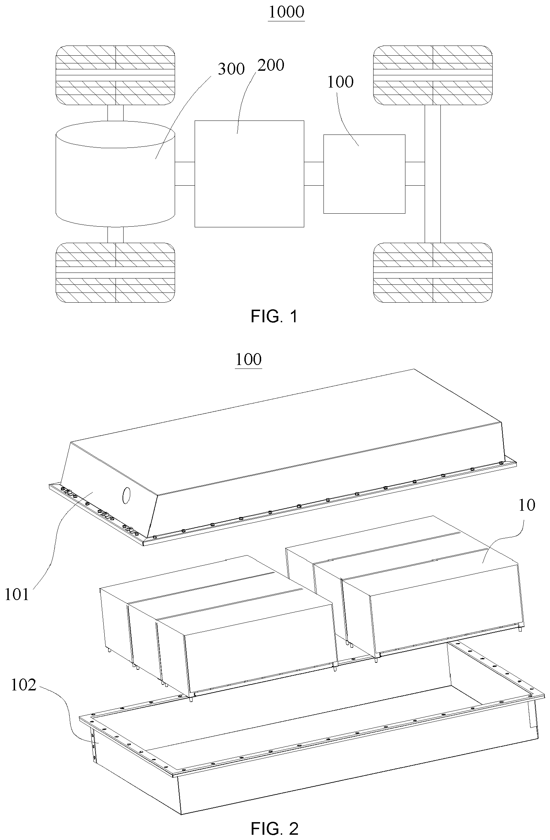

Refer to FIG. 1. FIG. 1 is a schematic structural diagram of a vehicle 1000 according to some embodiments of the present application. The vehicle 1000 may be a fuel-powered vehicle, a gas-powered vehicle or a new energy vehicle, and the new energy vehicle may be a battery electric vehicle, a hybrid vehicle, an extended-range vehicle, or the like. A battery 100 is provided inside the vehicle 1000. The battery 100 may be disposed at the bottom, head or tail of the vehicle 1000. The battery 100 may be used for supplying power to the vehicle 1000. For example, the battery 100 may be used as an operation power supply of the vehicle 1000 and is used for a circuit system of the vehicle 1000, for example, for a working power demand of the vehicle 1000 during startup, navigation and running.

The vehicle 1000 may further include a controller 200 and a motor 300. The controller 200 is used for controlling the battery 100 to supply power to the motor 300, for example, for the working power demand of the vehicle 1000 during startup, navigation and running.

In some embodiments of the present application, the battery 100 may be used not only as an operation power supply of the vehicle 1000, but also as a driving power supply of the vehicle 1000 to replace or partially replace fuel or natural gas to provide driving power for the vehicle 1000.

Refer to FIG. 2. FIG. 2 is a schematic diagram of an exploded structure of the battery 100 according to some embodiments of the present application. The battery 100 includes a box body (or cover body) and a battery cell 10. The battery cell 10 is accommodated in the box body. The box body is used for providing an accommodating space for the battery cell 10, and the box body may have various structures. In some embodiments, the box body may include a first portion 101 and a second portion 102, the first portion 101 and the second portion 102 cover each other, and the first portion 101 and the second portion 102 jointly confine the accommodating space for accommodating the battery cell 10. The second portion 102 may be of a hollow structure with an opening at one end, the first portion 101 may be of a plate-like structure, and the first portion 101 covers an opening side of the second portion 102, so that the first portion 101 and the second portion 102 jointly confine the accommodating space. Alternatively, both the first portion 101 and the second portion 102 may be of a hollow structure with an opening on one side, and the opening side of the first portion 101 covers the opening side of the second portion 102.

In the battery 100, there may be a plurality of battery cells 10. The plurality of battery cells 10 may be connected in series, parallel, or series and parallel. The series and parallel connection refers to both series and parallel connection in the plurality of battery cells 10. The plurality of battery cells 10 may be directly connected in series, parallel, or series and parallel together, and then the whole composed of the plurality of battery cells 10 may be accommodated in the box body. Of course, the battery 100 may alternatively be in a form of battery modules composed of a plurality of battery cells 10 that are first connected in series, parallel, or series and parallel, then a plurality of battery modules are connected in series, parallel, or series and parallel to form a whole, and the whole is accommodated in the box body. The battery 100 may further include other structures. For example, the battery 100 may further include a busbar component for implementing an electrical connection between the plurality of battery cells 10.

Each battery cell 10 may be a secondary battery, a primary battery, a lithium-sulfur battery, a sodium-ion battery, or a magnesium-ion battery, but is not limited thereto. The battery cell 10 provided in the embodiments of the present application is square.

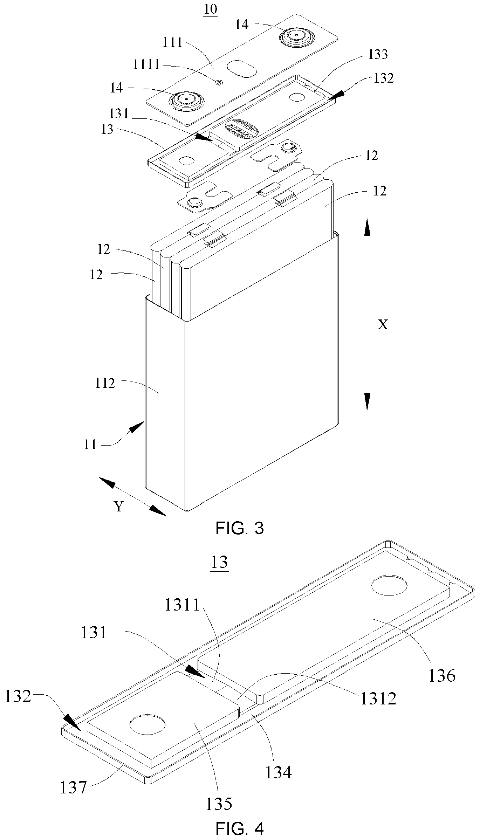

Refer to FIG. 3. FIG. 3 is a schematic diagram of an exploded structure of the battery cell 10 according to some embodiments of the present application. The battery cell 10 refers to a minimum unit that forms the battery 100. As shown in the figure, the battery cell 10 includes a shell 11, an electrode assembly 12, an insulating member 13 and other functional components.

The shell 11 is a component used for forming an internal environment of the battery cell 10, and the formed internal environment may be used for accommodating the electrode assembly 12, a medium (such as electrolyte) and other components. The shell 11 may include a shell body and an end cover, which may be independent components. Alternatively, the shell body is provided with an opening, and the end cover covers the opening to form the internal environment of the battery cell 10. Unlimitedly, the end cover and the shell body may be integrated. Specifically, the end cover and the shell body may form a common connection surface before other components are put in the shell. When the interior of the shell body is required to be encapsulated, the end cover is closed to the shell body. The shell body may be cuboid. Specifically, a shape of the shell body may be determined according to a specific shape and size of the electrode assembly 12. A material of the shell body may be various, such as copper, iron, aluminum, stainless steel, aluminum alloy, or plastic, and is not specially limited in the embodiments of the present application.

The end cover refers to a component that is closed to the opening of the shell body to isolate the internal environment of the battery cell 10 from an external environment. Unlimitedly, a shape of the end cover may adapt to the shape of the shell body to fit the shell body. Optionally, the end cover may be made of a material with certain hardness and strength (such as aluminum alloy). In this case, the end cover is less prone to deformation during extrusion and collision, so that the battery cell 10 can have higher structural strength and its safety performance can be improved. Functional components such as an electrode terminal 14 may be disposed on the end cover. The electrode terminal 14 may be used for electrical connection with the electrode assembly 12 to output or input electrical energy of the battery cell 10. In some embodiments, a pressure relief mechanism may be further disposed on the end cover to release internal pressure when the internal pressure or temperature of the battery cell 10 reaches a threshold. The material of the end cover may also be various, such as copper, iron, aluminum, stainless steel, aluminum alloy, or plastic, and is not specially limited in the embodiments of the present application.

The electrode assembly 12 is a component that undergoes electrochemical reactions in the battery cell 10. One or more electrode assemblies 12 may be contained in the shell body. The electrode assembly 12 is mainly formed by coiling or stacking a positive electrode sheet and a negative electrode sheet, a separator is usually disposed between the positive electrode sheet and the negative electrode sheet, and the separator is used for insulating and isolating the positive electrode sheet and the negative electrode sheet. Portions of the positive electrode sheet and the negative electrode sheet with active materials form a main body of the electrode assembly 12, while portions of the positive electrode sheet and the negative electrode sheet without active materials form respective tabs. The positive electrode tab and the negative electrode tab may be located at one end of the main body together or at two ends of the main body separately. In charging and discharging processes of the battery, the positive electrode active material and the negative electrode active material react with an electrolyte, and the tabs are connected to the electrode terminals 14 to form a current circuit.

The insulating member 13 is used for insulating electrical connection components inside the shell 11 from the shell 11 to reduce the risk of short circuits. For example, the insulating member 13 may be plastic, rubber, or the like.

According to some embodiments of the present application, refer to FIG. 3. The present application provides a battery cell 10. As shown in FIG. 3, the battery cell 10 includes a shell 11, an electrode assembly 12, and an insulating member 13. The shell 11 includes a first wall 111, and the first wall 111 is provided with a medium injection hole 1111. The electrode assembly 12 is disposed inside the shell 11. The insulating member 13 is disposed between the first wall 111 and the electrode assembly 12 to insulate and isolate the first wall 111 and the electrode assembly 12. A guide structure is disposed on a side, facing the first wall 111, of the insulating member 13 to guide a medium injected from the medium injection hole 1111 to an edge of the insulating member 13, so that the medium enters the interior of the battery cell 10 from the edge of the insulating member 13.

The shell 11 is a component used for forming an internal environment of the battery cell 10, and the formed internal environment may be used for accommodating the electrode assembly 12, a medium (such as electrolyte) and other components. The first wall 111 is a portion of the shell 11, the first wall 111 is provided with the medium injection hole 1111, and the medium injection hole 1111 may be a hole penetrating the first wall 111 in a thickness direction X of the first wall 111. The medium injection hole 1111 connects the interior and exterior of the battery cell 10, so that the medium can enter the interior of the battery cell 10 from the exterior of the battery cell 10.

The insulating member 13 is disposed between the first wall 111 and the electrode assembly 12, that is, the first wall 111, the insulating member 13 and the electrode assembly 12 are sequentially arranged in the thickness direction X of the first wall 111. In the figure, the direction indicated by the letter X is the thickness direction of the first wall 111.

The guide structure is a structure disposed on the side, facing the first wall 111, of the insulating member 13 to guide flowing of a medium, and may be a passage for guiding a fluid to pass through.

The medium may be an electrolyte, such as an electrolyte solution, which plays a role in conducting ions between a positive electrode and a negative electrode.

The interior of the battery cell 10 refers to an area enclosed by the inner wall of the shell 11 to accommodate the electrode assembly 12. The insulating member 13 is connected to the first wall 111, and the insulating member 13 and the shell 11 confine the interior of the battery cell 10.

According to the battery cell 10 in this embodiment of the present application, when a medium (such as an electrolyte solution) is injected into the interior of the battery cell 10, the guide structure guides the medium injected from the medium injection hole 1111 to the edge of the insulating member 13, so that the medium enters the interior of the battery cell 10 from the edge of the insulating member 13. The guide structure can disperse the medium and reduce the flow rate of the medium. When the medium enters the interior of the battery cell 10, the contact area between the medium and the electrode assembly 12 is small or even the medium does not directly impact the electrode assembly 12, which can effectively alleviate impact force of the medium on the electrode assembly 12, reduce the risk of damage to the electrode assembly 12 by the medium, and improve the safety of the battery cell 10.

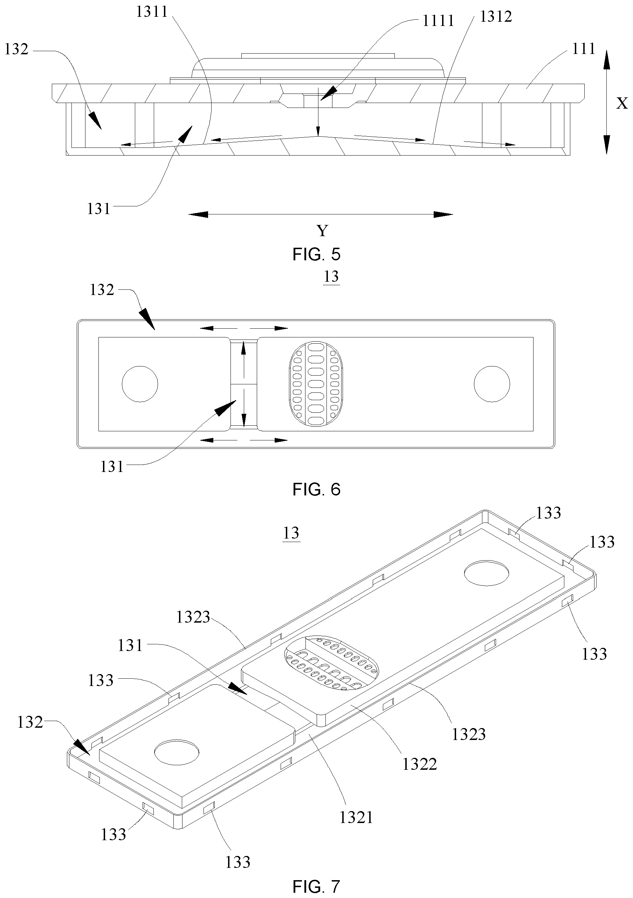

Refer to FIG. 4 and FIG. 5. FIG. 4 is an axonometric view of the insulating member 13 according to some embodiments of the present application, and FIG. 5 is a cross-sectional view of the first wall 111 and the insulating member 13 after assembly according to some embodiments of the present application.

According to some embodiments of the present application, as shown in FIG. 4 and FIG. 5, the guide structure includes a first guide groove 131, and a projection of the medium injection hole 1111 on the insulating member 13 is located in the first guide groove 131 in the thickness direction X of the first wall 111.

The first guide groove 131 is a groove disposed on the insulating member 13, and the medium can flow inside the first guide groove 131.

The projection of the medium injection hole 1111 on the insulating member 13 being located in the first guide groove 131 indicates that, as shown in FIG. 5, the medium injection hole 1111 corresponds to the first guide groove 131 in the thickness direction X of the first wall 111, and the medium can be carried by the first guide groove 131 when the medium is injected from the medium injection hole 1111 into the interior of the battery cell 10.

The projection of the medium injection hole 1111 on the insulating member 13 corresponds to the first guide groove 131, so that the first guide groove 131 receives the medium injected from the medium injection hole 1111 and enables the medium to disperse on the insulating member 13 to reduce the flow rate of the medium.

Refer to FIG. 6. FIG. 6 is a top view of the insulating member 13 according to some embodiments of the present application, and is a schematic structural diagram of the insulating member 13 from the perspective of a direction in which the first wall 111 points to the electrode assembly 12. According to some embodiments of the present application, as shown in FIG. 4 to FIG. 6, the guide structure further includes a second guide groove 132, the second guide groove 132 is an annular groove extending along the edge of the insulating member 13, the first guide groove 131 is in communication with the second guide groove 132, and the first guide groove 131 is used for guiding the medium to the second guide groove 132.

The second guide groove 132 is an annular groove that is on the side, facing the first wall 111, of the insulating member 13 and extends around the edge of the insulating member 13. When the medium flows inside the second guide groove 132, the medium can flow around the edge of the insulating member 13, so that the medium has a relatively long flow path.

The second guide groove 132 extends along the edge of the insulating member 13 and is an annular groove, and the first guide groove 131 is in communication with the second guide groove 132, so as to ensure that the medium injected from the medium injection hole 1111 flows to the edge of the insulating member 13 smoothly.

It should be pointed out that, in some embodiments, the second guide groove 132 may alternatively be a groove extending along the edge of the insulating member 13, and head and tail ends of the groove are not connected.

According to some embodiments of the present application, the bottom surface of the first guide groove 131 is a slope surface to guide the medium to the second guide groove 132.

The slope surface is a surface with an inclination angle. When the medium injected from the medium injection hole 1111 falls onto the bottom surface of the first guide groove 131, the medium can flow along the bottom surface of the first guide groove 131 towards the second guide groove 132.

That is, there is an angle between the bottom surface of the first guide groove 131 and the bottom surface of the second guide groove 132, which enables the medium inside the first guide groove 131 to quickly flow towards the second guide groove 132 smoothly.

The first guide groove 131 is in communication with the second guide groove 132 in two forms: in the first form, one end of the first guide groove 131 is in communication with the second guide groove 132, the other end of the first guide groove 131 is disconnected from the second guide groove 132, and in this case, the bottom surface of the first guide groove 131 can only guide the medium from one end of the first guide groove 131 to the second guide groove 132; and in the second form, both ends of the first guide groove 131 are in communication with the second guide groove 132, and in this case, the first guide groove 131 can guide the medium from both ends of the first guide groove 131 to the second guide groove 132.

According to some embodiments of the present application, as shown in FIG. 4 to FIG. 6, both ends of the first guide groove 131 are in communication with the second guide groove 132, the bottom surface of the first guide groove 131 includes a first slope surface 1311 and a second slope surface 1312, the first slope surface 1311 extends from a middle part of the first guide groove 131 to one end of the first guide groove 131, the second slope surface 1312 extends from the middle part of the first guide groove 131 to the other end of the first guide groove 131, and the projection of the medium injection hole 1111 on the insulating member 13 is located at the intersection of the first slope surface 1311 and the second slope surface 1312.

The first slope surface 1311 and the second slope surface 1312 are two opposite slope surfaces, and a highest end of the first slope surface 1311 intersects that of the second slope surface 1312.

The middle part of the first guide groove 131 may be a middle position of the extension direction of the first guide groove 131, and the first slope surface 1311 and the second slope surface 1312 have the same length in the extension direction of the first guide groove 131, so that the medium can be evenly shunt.

The projection of the medium injection hole 1111 on the insulating member 13 is located at the intersection of the first slope surface 1311 and the second slope surface 1312. When the medium injected via the medium injection hole 1111 falls to the bottom surface of the first guide groove 131, the medium is shunt by the first slope surface 1311 and the second slope surface 1312, with a portion flowing to the second guide groove 132 via the first slope surface 1311, and the other portion flowing to the second guide groove 132 via the second slope surface 1312.

The configuration of the first slope surface 1311 and the second slope surface 1312 facilitates guidance of the medium injected from the medium injection hole 1111 to both ends of the first guide groove 131 by the first slope surface 1311 and the second slope surface 1312, so as to ensure that the medium enters the second guide groove 132 and flows smoothly.

Refer to FIG. 7. FIG. 7 is a schematic structural diagram of through holes 133 of the insulating member 13 according to some embodiments of the present application. According to some embodiments of the present application, as shown in FIG. 7, a wall of the second guide groove 132 is provided with a through hole 133 from which the medium inside the second guide groove 132 flows out.

The through hole 133 is a hole disposed on the wall of the second guide groove 132, and the through hole 133 enables the second guide groove 132 to be in communication with the interior of the battery cell 10.

The through hole 133 facilitates flowing of the medium out of the second guide groove 132, so as to guide the medium to enter the interior of the battery cell 10.

It should be pointed out that there is a plurality of through holes 133 which are arranged at intervals along the edge of the insulating member 13 to facilitate the flowing of the medium out of the second guide groove 132 and ensure smooth flowing of the medium.

According to some embodiments of the present application, a projection of the electrode assembly 12 on the insulating member 13 does not overlap at least partially with the through hole 133.

The projection of the electrode assembly 12 on the insulating member 13 does not overlap at least partially with the through hole 133, which may include: the projection of the electrode assembly 12 on the insulating member 13 has a partially overlapping area with the through hole 133, or the projection of the electrode assembly 12 on the insulating member 13 does not overlap with the through hole 133. The projection of the electrode assembly 12 on the insulating member 13 does not overlap with the through hole 133, that is, the through hole 133 avoids the electrode assembly 12 in the thickness direction X of the first wall 111.

In the thickness direction X of the first wall 111, the through hole 133 does not overlap at least partially with the projection of the electrode assembly 12 on the insulating member 13, which can reduce a probability of direct action of the medium on the electrode assembly 12 when the medium flows out of the second guide groove 132 from the through hole 133. In an extreme case, the through hole 133 does not overlap with the projection of the electrode assembly 12 on the insulating member 13, the medium flows in the thickness direction X of the first wall 111 or in a direction of gravity, and the medium does not directly impact the electrode assembly 12, thereby reducing the risk of damage to the electrode assembly 12 by the medium.

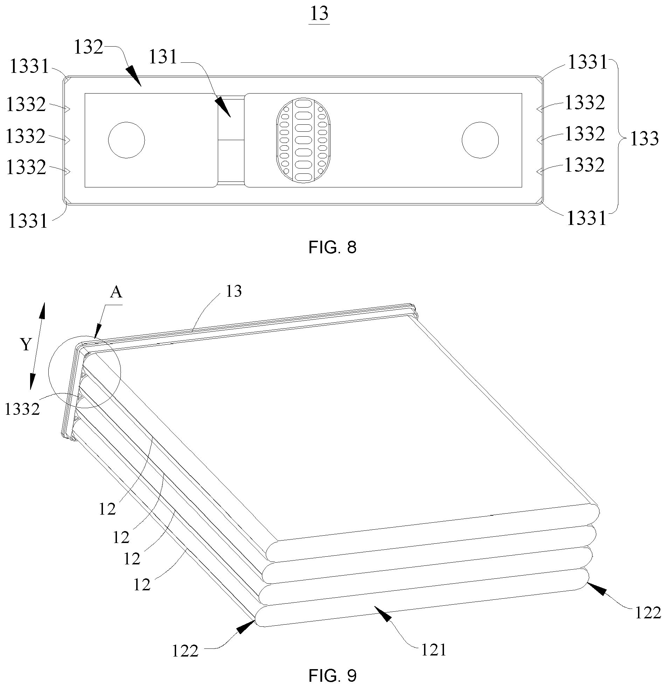

Refer to FIG. 8. FIG. 8 is a schematic structural diagram of the through holes 133 of the insulating member 13 according to other embodiments of the present application. According to some embodiments of the present application, as shown in FIG. 8, the insulating member 13 is rectangular, and the through hole 133 includes a first sub through hole 1331 located at a corner of the insulating member 13.

The insulating member 13 is rectangular, and an intersection of length and width directions of the insulating member 13 forms the corner.

In the battery cell 10, the electrode assembly 12 includes a straight area and bent areas connected to two ends of the straight area, and the bent areas are close to the corners of the insulating member 13, so that the projection of the electrode assembly 12 on the insulating member 13 does not overlap with the corners of the insulating member 13. The first sub through hole 1331 is located at the corner of the insulating member 13, whereby the non-overlapping area between the insulating member 13 and the electrode assembly 12 can be reasonably used, the energy density of the battery cell 10 is ensured, and the medium can enter the interior of the battery cell 10 without directly impacting the electrode assembly 12.

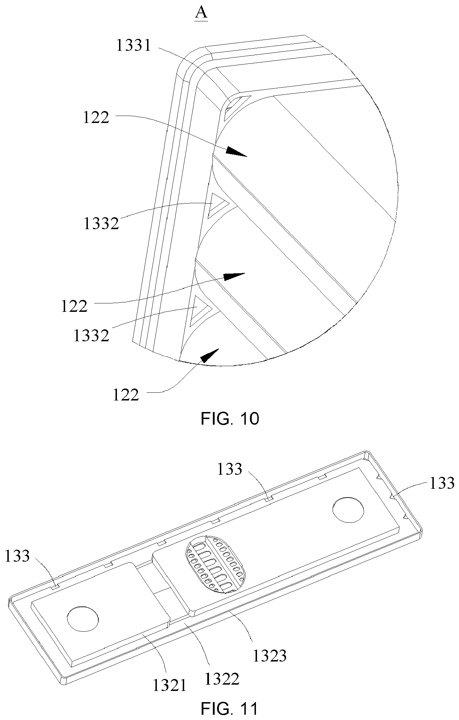

Refer to FIG. 9 and FIG. 10. FIG. 9 is a schematic assembly diagram of electrode assemblies 12 and the insulating member 13 according to some embodiments of the present application, and FIG. 10 is an enlarged view of position A in FIG. 9. According to some embodiments of the present application, as shown in FIG. 3 and FIG. 9, there is a plurality of electrode assemblies 12 which are arranged in their thickness direction, and each electrode assembly 12 includes a straight area 121 and bent areas 122 connected to two ends of the straight area 121. As shown in FIG. 8 to FIG. 10, each through hole 133 includes a second sub through hole 1332, and the second sub through holes 1332 are disposed at two ends of the insulating member 13 in the length direction and located between the projections of the bent areas 122 of two adjacent electrode assemblies 12 on the insulating member 13.

In the thickness direction Y of the electrode assemblies 12, the plurality of electrode assemblies 12 are sequentially arranged, each electrode assembly 12 includes a bent area 122, a space is formed between the bent areas 122 of the two adjacent electrode assemblies 12, and the medium will not directly impact the electrode assembly 12 when the medium flows out from the second sub through hole 1332 to the second guide groove 132 and enters this space. In the figure, the direction indicated by the letter Y is the thickness direction of the electrode assemblies 12.

There is a plurality of second through holes 1332 which are distributed at two ends of the insulating member 13 in the length direction, and the second through holes 1332 are also distributed between the projections of the bent areas 122 of the two adjacent electrode assemblies 12 on the insulating member 13. According to the size of the insulating member 13, one or more second sub through holes 1332 may be located between the projections of the bent areas 122 of the two adjacent electrode assemblies 12 on the insulating member 13.

A shape of the second sub through hole 1332 may be arbitrary, such as triangular, circular, square, or irregular. Optionally, the shape of the second sub through hole 1332 is irregular, and the second sub through hole 1332 has two arc-shaped segments that match the contour of the bent area 122, so that the second sub through hole 1332 has a larger area.

When there is a plurality of electrode assemblies 12, the second sub through hole 1332 is disposed at a position of the insulating member 13 that corresponds to an area between the bent areas 122 of the two adjacent electrode assemblies 12, so that the medium does not directly act on the electrode assemblies 12 when entering the battery cell 10 via the second sub through hole 1332, the space formed between the bent areas 122 of the two adjacent electrode assemblies 12 is reasonably used, and the impact force of the medium on the electrode assemblies 12 is weakened.

In some embodiments, when there is a plurality of electrode assemblies 12, as shown in FIG. 8, each through hole 133 may include a first sub through hole 1331 and a second sub through hole 1332, the first sub through hole 1331 is located at the corner of the insulating member 13, and the second sub through holes 1332 are disposed at two ends of the insulating member 13 in the length direction and located between the projections of the bent areas 122 of the two adjacent electrode assemblies 12 on the insulating member 13.

Refer to FIG. 11. FIG. 11 is a schematic structural diagram of the insulating member 13 according to some embodiments of the present application. According to some embodiments of the present application, as shown in FIG. 7 and FIG. 11, the walls of the second guide groove 132 include a bottom wall 1321, an inner wall 1322 and an outer wall 1323, the outer wall 1323 and the inner wall 1322 are disposed opposite, and the through hole 133 is disposed on the outer wall 1323 or at the intersection of the outer wall 1323 and the bottom wall 1321.

A surface of the bottom wall 1321 is the bottom surface of the second guide groove 132, and is used for carrying the medium. The inner wall 1322 and the outer wall 1323 are disposed opposite, and the bottom wall 1321 points to the first wall 111. The inner wall 1322 is a wall, near the middle part of the insulating member 13, of the second guide groove 132, while the outer wall 1323 is a wall, away from the middle part of the insulating member 13, of the second guide groove 132, so the outer wall 1323 is closer to the edge of the insulating member 13 than the inner wall 1322.

As shown in FIG. 7, when the through hole 133 is disposed on the outer wall 1323, the through hole 133 is closer to the edge of the insulating member 13, and the through hole 133 penetrates the outer wall 1323.

As shown in FIG. 11, when the through hole 133 is disposed at the intersection of the outer wall 1323 and the bottom wall 1321, the through hole 133 penetrates the intersection of the outer wall 1323 and the bottom wall 1321.

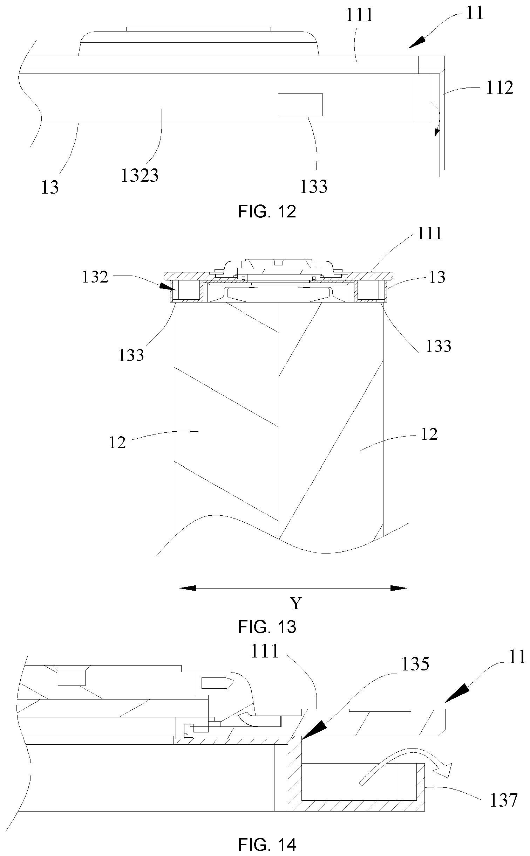

The bottom wall 1321 carries the medium, while the outer wall 1323 and the inner wall 1322 constrain the medium. When the through hole 133 is disposed on the outer wall 1323, FIG. 12 is a partial schematic diagram of the insulating member 13 and the shell 11 after assembly according to some embodiments of the present application. As shown in FIG. 12, the arrow represents flowing of the medium. When the medium enters the battery cell 10 from the through hole 133 located on the outer wall 1323, the medium first acts on the inner wall of the shell 11 and slows down to reduce the impact force on the electrode assemblies 12 (as shown in FIG. 3). When the through hole 133 is disposed at the intersection of the outer wall 1323 and the bottom wall 1321, because the projection of the electrode assembly 12 on the insulating member 13 has a small overlapping area with the edge of the insulating member 13, or the projection of the electrode assembly 12 on the insulating member 13 is located inside the insulating member 13, the medium can be prevented as much as possible from directly acting on the electrode assembly 12 when entering the interior of the battery cell 10 from the intersection of the outer wall 1323 and the bottom wall 1321, the impact force of the medium on the electrode assembly 12 can be effectively weakened, and the damage to the electrode assembly 12 by the medium can be reduced.

For example, in some embodiments, FIG. 13 is a partial cross-sectional view of the insulating member 13 and the electrode assemblies 12 after assembly according to some embodiments of the present application. As shown in FIG. 13, when the through holes 133 are disposed at two edges of the insulating member 13 in the thickness direction Y of the electrode assemblies 12 (namely, the width direction of the insulating member 13), and when the battery cell 10 is designed with a larger energy density, the projections of the electrode assemblies 12 on the insulating member 13 overlap partially with the through holes 133. In this case, the medium flowing out of the through holes 133 will directly act on the electrode assemblies 12. However, due to the small overlapping area, the medium at this portion affects the electrode assemblies 12 little. Meanwhile, in order to further reduce the impact of the medium on the electrode assemblies 12, the through holes 133 may alternatively be disposed at two edges of the insulating member 13 in the length direction, and are configured not to overlap with the projections of the electrode assemblies 12 on the insulating member 13, for example, disposed in non-overlapping areas between the electrode assemblies 12 and the edges of the insulating member 13 or in blank areas between two adjacent electrode assemblies 12.

In the embodiment wherein the through hole 133 includes a first sub through hole 1331, the first sub through hole 1331 may be disposed on the outer wall 1323 or at the intersection of the outer wall 1323 and the bottom wall 1321. For example, when the first sub through hole 1331 is disposed at the intersection of the outer wall 1323 and the bottom wall 1321, the medium can enter the interior of the battery cell 10 in the thickness direction of the insulating member 13, without directly impacting the electrode assembly 12, so the medium flows smoothly and will not accumulate in the second guide groove 132.

In the embodiment wherein the through hole 133 includes a second sub through hole 1332, the second sub through hole 1332 may be disposed on the outer wall 1323 or at the intersection of the outer wall 1323 and the bottom wall 1321. For example, when the second sub through hole 1332 is disposed at the intersection of the outer wall 1323 and the bottom wall 1321, the medium can enter the interior of the battery cell 10 in the thickness direction of the insulating member 13, without directly impacting the electrode assembly 12, so the medium flows smoothly and will not accumulate in the second guide groove 132.

According to some embodiments of the present application, as shown in FIG. 4, the insulating member 13 includes a bottom plate 134, a first boss 135 and a second boss 136, the first boss 135 and the second boss 136 are formed on a side, facing the first wall 111, of the bottom plate 134, the first boss 135 and the second boss 136 are spaced, and the first guide groove 131 is formed between the first boss 135 and the second boss 136.

The first boss 135 and the second boss 136 are formed on the side, facing the first wall 111, of the bottom plate 134, that is, the first boss 135 and the second boss 136 protrude towards the first wall 111 relative to the bottom plate 134.

The first boss 135 and the second boss 136 are spaced, there is a space between a surface of the first boss 135 and a surface of the second boss 136, and the medium can be accommodated between the first boss 135 and the second boss 136, so that the medium flows between the first boss 135 and the second boss 136. A surface, near the second boss 136, of the first boss 135 and a surface, near the first boss 135, of the second boss 136 form two side walls of the first guide groove 131, and the bottom plate 134 located between the first boss 135 and the second boss 136 forms the bottom wall 1321 of the first guide groove 131.

The first guide groove 131 is formed between the first boss 135 and the second boss 136, and a flow path of the medium is confined through the first boss 135, the second boss 136 and the bottom plate 134, so the structure is simple, and the insulating member 13 has high strength.

According to some embodiments of the present application, as shown in FIG. 4, the insulating member 13 further includes a flange 137, the flange 137 is disposed on the periphery of the bottom plate 134 and protrudes from the bottom plate 134 towards the first wall 111, the flange 137 encloses the first boss 135 and the second boss 136, and the second guide groove 132 is formed between an outer circumference surface of the first boss 135 and the second boss 136 and an inner circumference surface of the flange 137.

The flange 137 is disposed on the periphery of the bottom plate 134, and the flange 137 encloses the first boss 135 and the second boss 136, that is, the flange 137 is disposed around the edge of the bottom plate 134 to form the edge of the insulating member 13. The flange 137 protrudes from the bottom plate 134 towards the first wall 111, and the flange 137 can limit the medium to the space enclosed by the bottom plate 134 and the flange 137.

The flange 137 is disposed on the periphery of the bottom plate 134 and encloses the first boss 135 and the second boss 136 to form the second guide groove 132, so the structure is simple and the medium can enter the interior of the battery cell 10 from the edge of the insulating member 13.

According to some embodiments of the present application, the first boss 135 and the second boss 136 abut against the first wall 111, there is a gap between the flange 137 and the first wall 111, and the medium inside the second guide groove 132 flows out from the gap.

The first boss 135 and the second boss 136 abut against the first wall 111, so the insulating member 13 has a large contact area with the first wall 111 to position the insulating member 13 with the first wall 111. Refer to FIG. 14. FIG. 14 is a partial cross-sectional view of the insulating member 13 and the shell 11 after assembly according to other embodiments of the present application. FIG. 14 shows that the first boss 135 is assembled with the first wall 111, there is a gap between the flange 137 and the first wall 111, and the medium can flow out of the gap.

The flange 137, the first boss 135, and the second boss 136 enclose the second guide groove 132, the first boss 135 and the second boss 136 abut against the first wall 111, there is a gap between the flange 137 and the first wall 111, the medium inside the second guide groove 132 can only flow out from the gap between the flange 137 and the first wall 111, and the medium flowing out directly acts on the inner wall of the shell 11, whereby the flow rate and impact force of the medium are retarded, and the impact damage to the electrode assembly 12 by the medium is reduced.

The first boss 135 and the second boss 136 abut against the first wall 111 to ensure stable positioning of the insulating member 13 with the first wall 111; and the gap between the flange 137 and the first wall 111 facilitates flowing of the medium out of the second guide groove 132, so the structure is simple and easy to machine.

Further, in order to facilitate rapid flowing of the medium out of the second guide groove 132, the walls of the second guide groove 132 may be provided with through holes 133, so that the medium inside the second guide groove 132 may flow out through the through holes 133 and the gap between the flange 137 and the first wall 111.

According to some embodiments of the present application, the first boss 135, the second boss 136 and the flange 137 all abut against the first wall 111.

The first boss 135, the second boss 136 and the flange 137 all abut against the first wall 111 to form a blockage at an end, near the first wall 111, of the second guide groove 132, so the medium is unlikely to flow out between the flange 137 and the first wall 111 or between the first boss 135 and the second boss 136 and the first wall 111. In this case, the wall of the second guide groove 132 is provided with a through hole 133 from which the medium inside the second guide groove 132 flows out.

The first boss 135, the second boss 136 and the flange 137 all abut against the first wall 111, and the insulating member 13 has a plurality of contact positions and a large contact area with the first wall 111, so that the insulating member 13 is stably positioned with the first wall 111.

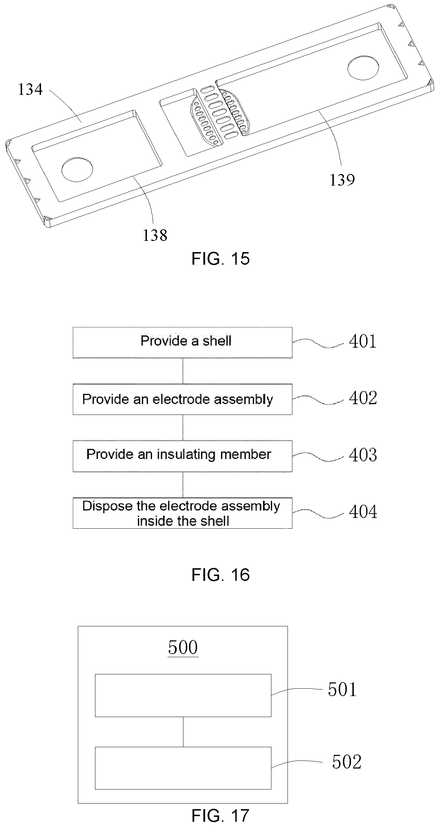

Refer to FIG. 15. FIG. 15 is a schematic structural diagram of the insulating member 13 according to some embodiments of the present application. According to some embodiments of the present application, as shown in FIG. 4 and FIG. 15, a first recessed portion 138 and a second recessed portion 139 are disposed on a side, away from the first wall 111, of the insulating member 13, the first recessed portion 138 corresponds to the first boss 135, and the second recessed portion 139 corresponds to the second boss 136.

The first recessed portion 138 and the second recessed portion 139 are disposed on the side, away from the first wall 111, of the insulating member 13, that is, the first recessed portion 138 and the second recessed portion 139 face the electrode assembly 12.

The first recessed portion 138 corresponding to the first boss 135 indicates that the first recessed portion 138 overlaps with the first boss 135 in the thickness direction X of the first wall 111, that is, the first recessed portion 138 is formed by recessing from the side, away from the first wall 111, of the insulating member 13 towards the first wall 111, and the first boss 135 protrudes on the side, facing the first wall 111, of the insulating member 13 while the first recessed portion 138 is formed.

Similarly, the second recessed portion 139 corresponding to the second boss 136 indicates that the second recessed portion 139 overlaps with the second boss 136 in the thickness direction X of the first wall 111, that is, the second recessed portion 139 is formed by recessing from the side, away from the first wall 111, of the insulating member 13 towards the first wall 111, and the second boss 136 protrudes on the side, facing the first wall 111, of the insulating member 13 while the second recessed portion 139 is formed.

The first recessed portion 138 corresponds to the first boss 135, and the second recessed portion 139 corresponds to the second boss 136, so that the tabs of the electrode assembly 12 can extend into the first recessed portion 138 and the second recessed portion 139, and the installation space can be saved to improve the energy density of the battery cell 10.

According to some embodiments of the present application, as shown in FIG. 3, the shell 11 includes a shell body 112 and an end cover, the shell body 112 has an opening, the end cover covers the opening, and the first wall 111 is the end cover.

The shell body 112 has the opening from which the electrode assembly 12 is placed inside the shell body 112. The end cover covers the opening and is connected to the shell body 112 to form a closed chamber for accommodating the battery cell 10. The shell body 112 may be a second wall, and one end of the second wall is disposed around the end cover and forms the opening.

The first wall 111 is the end cover, and the end cover covers the opening of the shell body 112 to facilitate machining and assembly.

According to some embodiments of the present application, the present application provides a battery, including the battery cell 10 as described in any of the foregoing solutions.

According to some embodiments of the present application, the present application provides a power consumption device, including the battery cell 10 as described in any of the foregoing solutions, where the battery cell 10 is used for providing electrical energy to the power consumption device.

The power consumption device may be any of the foregoing devices or systems that use the battery cell 10.

According to some embodiments of the present application, as shown in FIG. 3 to FIG. 15, the present application provides a battery cell 10, which includes a shell 11, an electrode assembly 12, and an insulating member 13. The shell 11 includes a shell body 112 and an end cover, the shell body 112 has an opening, the end cover covers the opening, and the end cover is a first wall 111. The electrode assembly 12 is disposed inside the shell body 112. The insulating member 13 is disposed between the first wall 111 and the electrode assembly 12 to insulate and isolate the first wall 111 and the electrode assembly 12. A guide structure is disposed on a side, facing the first wall 111, of the insulating member 13, and the guide structure includes a first guide groove 131 and a second guide groove 132. A projection of the medium injection hole 1111 on the insulating member 13 is located in the first guide groove 131 in a thickness direction X of the first wall 111. The second guide groove 132 is an annular groove extending along an edge of the insulating member 13, and the first guide groove 131 is in communication with the second guide groove 132. The first guide groove 131 is used for receiving a medium (such as electrolyte solution) injected from a medium injection hole 1111 and guiding the medium to the second guide groove 132. A wall of the second guide groove 132 is provided with a through hole 133 from which the medium inside the second guide groove 132 flows out. The through hole 133 is disposed at the intersection of the outer wall 1323 and the bottom wall 1321 of the second guide groove 132. The insulating member 13 is rectangular, and the through hole 133 includes a first sub through hole 1331 and a second sub through hole 1332. The first sub through hole 1331 is located at a corner of the insulating member 13. There is a plurality of electrode assemblies 12, and the second sub through holes 1332 are disposed at two ends of the insulating member 13 in the length direction and located between projections of bent areas 122 of two adjacent electrode assemblies 12 on the insulating member 13. The projection of the electrode assembly 12 on the insulating member 13 does not overlap with the first sub through hole 1331 and the second sub through hole 1332. In the battery cell 10, the medium injected from the medium injection hole 1111 can be guided to the edge of the insulating member 13 through the guide structure disposed on the insulating member 13 and enters the interior of the battery cell 10 from the edge of the insulating member 13, where the guide structure can disperse the medium and retard the flow rate of the medium, thereby reducing direct action of the medium on the electrode assembly 12, alleviating impact force of the medium acting on the electrode assembly 12, reducing the risk of damage to the electrode assembly 12 by the medium, and improving the safety of the battery cell 10.

FIG. 16 shows a schematic flowchart of a manufacturing method for the battery cell 10 according to some embodiments of the present application. As shown in FIG. 16, the manufacturing method for the battery cell 10 may include:
401: Provide a shell 11, where the shell 11 includes a first wall 111, and the first wall 111 is provided with a medium injection hole 1111;
402: Provide an electrode assembly 12;
403: Provide an insulating member 13, where the insulating member 13 is provided with a guide structure, and the guide structure is configured to guide a medium injected from the medium injection hole 1111 to an edge of the insulating member 13 to enter the interior of the battery cell 10 from the edge of the insulating member 13; and
404: Dispose the electrode assembly 12 inside the shell 11 and dispose the insulating member 13 between the first wall 111 and the electrode assembly 12 to insulate and isolate the first wall 111 and the electrode assembly 12, so that the guide structure is located on a side, facing the first wall 111, of the insulating member 13.

It should be pointed out that the sequence of steps "401: Provide a shell 11", "402: Provide an electrode assembly 12" and "403: Provide an insulating member 13" is not unique. In some embodiments, steps "402: Provide an electrode assembly 12", "401: Provide a shell 11" and "403: Provide an insulating member 13" may be performed sequentially, or steps "403: Provide an insulating member 13", "401: Provide a shell 11" and "402: Provide an electrode assembly 12" may be performed sequentially. The present application does not limit the sequence of steps "401: Provide a shell 11", "402: Provide an electrode assembly 12" and "403: Provide an insulating member 13".

According to the manufacturing method for the battery cell 10 in this embodiment of the present application, the medium is guided to enter the interior of the battery cell 10 from the edge of the insulating member 13 through the guide structure disposed on the insulating member 13, which can effectively alleviate impact force of the medium acting on the electrode assembly 12 and reduce the risk of damage to the electrode assembly 12 by the medium, so that the battery cell 10 has relatively high safety.

FIG. 17 shows a schematic block diagram of a battery cell manufacturing device 500 according to some embodiments of the present application. As shown in FIG. 17, the battery cell manufacturing device 500 may include a provision module 501 and an assembly module 502. The provision module 501 is configured to provide a shell 11, an electrode assembly 12, and an insulating member 13, the shell 11 includes a first wall 111, the first wall 111 is provided with a medium injection hole 1111, the insulating member 13 is provided with a guide structure, and the guide structure is configured to guide a medium injected from the medium injection hole 1111 to an edge of the insulating member 13 to enter the interior of the battery cell 10 from the edge of the insulating member 13; and the assembly module 502 is configured to dispose the electrode assembly 12 inside the shell 11 and dispose the insulating member 13 between the first wall 111 and the electrode assembly 12 to insulate and isolate the first wall 111 and the electrode assembly 12, so that the guide structure is located on a side, facing the first wall 111, of the insulating member 13.

According to this embodiment of the present application, the battery cell manufacturing device 500 can manufacture the battery cell 10 with relatively high safety.

Although the present application is described with reference to preferred embodiments, various improvements may be made and components may be replaced with equivalents without departing from the scope of the present application. In particular, as long as there is no structural conflict, various technical features mentioned in the embodiments may be combined in any manner. The present application is not limited to the specific embodiments disclosed herein, but includes all technical solutions falling within the scope of the claims.

## Claims

1. A battery cell, comprising:
a shell, comprising a first wall provided with a medium injection hole;
an electrode assembly, disposed inside the shell; and
an insulating member, disposed between the first wall and the electrode assembly to insulate and isolate the first wall and the electrode assembly, wherein
a guide structure is disposed on a side, facing the first wall, of the insulating member, and the guide structure is configured to guide a medium injected from the medium injection hole to an edge of the insulating member, so that the medium enters an interior of the battery cell from the edge of the insulating member.

2. The battery cell according to claim 1, wherein the guide structure comprises a first guide groove, and a projection of the medium injection hole on the insulating member is located in the first guide groove in a thickness direction of the first wall.

3. The battery cell according to claim 2, wherein the guide structure further comprises a second guide groove, the second guide groove is an annular groove extending along the edge of the insulating member, the first guide groove is in communication with the second guide groove, and the first guide groove is configured for guiding the medium to the second guide groove.

4. The battery cell according to claim 3, wherein a bottom surface of the first guide groove is a slope surface to guide the medium to the second guide groove.

5. The battery cell according to claim 4, wherein both ends of the first guide groove are in communication with the second guide groove, the bottom surface of the first guide groove comprises a first slope surface and a second slope surface, the first slope surface extends from a middle part of the first guide groove to one end of the first guide groove, the second slope surface extends from the middle part of the first guide groove to the other end of the first guide groove, and the projection of the medium injection hole on the insulating member is located at an intersection of the first slope surface and the second slope surface.

6. The battery cell according to any one of claims 3-5, wherein a wall of the second guide groove is provided with a through hole from which the medium inside the second guide groove flows out.

7. The battery cell according to claim 6, wherein a projection of the electrode assembly on the insulating member does not overlap at least partially with the through hole.

8. The battery cell according to claim 7, wherein the insulating member is rectangular, and the through hole comprises a first sub through hole located at a corner of the insulating member.

9. The battery cell according to claim 7 or 8, wherein a plurality of electrode assemblies are provided, which are arranged in their thickness direction, each electrode assembly comprises a straight area and bent areas connected to two ends of the straight area, each through hole comprises a second sub through hole, and the second sub through holes are disposed at two ends of the insulating member in a length direction and located between projections of the bent areas of two adjacent electrode assemblies on the insulating member.

10. The battery cell according to any one of claims 6-9, wherein walls of the second guide groove comprise a bottom wall, an inner wall and an outer wall, the outer wall and the inner wall are disposed oppositely, and the through hole is disposed on the outer wall or at an intersection of the outer wall and the bottom wall.

11. The battery cell according to any one of claims 3-10, wherein the insulating member comprises a bottom plate, a first boss and a second boss, the first boss and the second boss are formed on a side, facing the first wall, of the bottom plate, the first boss and the second boss are spaced, and the first guide groove is formed between the first boss and the second boss.

12. The battery cell according to claim 11, wherein the insulating member further comprises a flange, the flange is disposed on a periphery of the bottom plate and protrudes from the bottom plate towards the first wall, the flange encloses the first boss and the second boss, and the second guide groove is formed between an outer circumference surface of the first boss and the second boss and an inner circumference surface of the flange.

13. The battery cell according to claim 12, wherein the first boss and the second boss abut against the first wall, a gap is formed between the flange and the first wall, and the medium inside the second guide groove flows out from the gap.

14. The battery cell according to claim 12, wherein the first boss, the second boss and the flange all abut against the first wall.

15. The battery cell according to any one of claims 11-14, wherein a first recessed portion and a second recessed portion are disposed on a side, away from the first wall, of the insulating member, the first recessed portion corresponds to the first boss, and the second recessed portion corresponds to the second boss.

16. The battery cell according to any one of claims 1-15, wherein the shell comprises a shell body and an end cover, the shell body has an opening, the end cover covers the opening, and the first wall is the end cover.

17. A battery, comprising the battery cell according to any one of claims 1-16.

18. An power consumption device, comprising the battery cell according to any one of claims 1-16, wherein the battery cell is configured for providing electrical energy.

19. A battery cell manufacturing method, comprising:
providing a shell, wherein the shell comprises a first wall, and the first wall is provided with a medium injection hole;
providing an electrode assembly;
providing an insulating member, wherein the insulating member is provided with a guide structure, and the guide structure is configured to guide a medium injected from the medium injection hole to an edge of the insulating member to enter an interior of the battery cell from the edge of the insulating member; and
disposing the electrode assembly inside the shell and disposing the insulating member between the first wall and the electrode assembly to insulate and isolate the first wall and the electrode assembly, so that the guide structure is located on a side, facing the first wall, of the insulating member.

20. A battery cell manufacturing device, comprising:
a provision module, configured to provide a shell, an electrode assembly, and an insulating member, wherein the shell comprises a first wall, the first wall is provided with a medium injection hole, the insulating member is provided with a guide structure, and the guide structure is configured to guide a medium injected from the medium injection hole to an edge of the insulating member to enter an interior of the battery cell from the edge of the insulating member; and
an assembly module, configured to dispose the electrode assembly inside the shell and dispose the insulating member between the first wall and the electrode assembly to insulate and isolate the first wall and the electrode assembly, so that the guide structure is located on a side, facing the first wall, of the insulating member.
